# EUROPEAN PATENT APPLICATION

(11) **EP 4 220 191 A1**
(43) Date of publication of application: **02.08.2023**
(21) Application number: 21884563.4
(22) Date of filing: 09.08.2021
(51) Int. Cl.: G01P 15/125, G01P 15/18, G01C 21/16

(54) **ACCELEROMETER, INERTIAL MEASUREMENT UNIT (IMU) AND ELECTRONIC DEVICE**

(30) Priority: 29.10.2020 CN 202011187895
(71) Applicant: Huawei Technologies Co., Ltd., Shenzhen, Guangdong 518129 (CN)
(72) Inventor: TANG, Shihao, Shenzhen, Guangdong 518129 (CN); HU, Qifang, Shenzhen, Guangdong 518129 (CN); XU, Jinghui, Shenzhen, Guangdong 518129 (CN)
(74) Representative: Pfenning, Meinig & Partner mbB
(86) International application number: PCT/CN2021/111572
(87) International publication number: WO 2022/088831

(57) **Abstract**

This application provides an accelerometer, an inertial measurement unit IMU, and an electronic device. A first anchor region is located at a central position of a first axis accelerometer, to help reduce temperature coefficients of parameters such as a bias and a scale factor of the accelerometer, and improve stability of a component. The accelerometer includes an upper cover layer, the first axis accelerometer, and a substrate layer. The first axis accelerometer includes the first anchor region, a cantilever beam, a first proof mass, a first movable electrode, a second movable electrode, a first fixed electrode, a second fixed electrode, a second anchor region, and a third anchor region. The first proof mass is supported by the cantilever beam and suspended above the substrate layer. The first anchor region, the second anchor region, and the third anchor region are separately connected to the substrate layer and/or the upper cover layer. The first anchor region is located at the central position of the first axis accelerometer. This application may be applied to fields such as consumer electronics, wearable devices, industrial automation, the automobile industry, and the aircraft industry.

## Description

This application claims priority to Chinese Patent Application No. 202011187895.6, filed with the China National Intellectual Property Administration on October 29, 2020 and entitled "ACCELEROMETER, INERTIAL MEASUREMENT UNIT IMU, AND ELECTRONIC DEVICE", which is incorporated herein by reference in its entirety.

### TECHNICAL FIELD

This application relates to the field of micro-electromechanical systems (micro-electromechanical systems, MEMSs), and more specifically, to an accelerometer, an inertial measurement unit IMU, and an electronic device.

### BACKGROUND

A MEMS is a high-tech apparatus whose size is several millimeters or even smaller. An internal structure of the MEMS is generally at a micrometer level or even a nanometer level, and is an independent system. The micro-electromechanical system is developed on the basis of micro-electronic technologies, and integrates technologies in a plurality of fields such as microelectronics, semiconductors, optics, electronic engineering, chemistry, materials engineering, mechanical engineering, medicine, and bioengineering. The micro-electromechanical system generally includes a plurality of modules such as a micro-sensor, a micro-actuator, a micro-mechanical structure, micro-energy, and a signal processing and control circuit. Common MEMS products include MEMS accelerometers, MEMS gyroscopes, MEMS microphones, MEMS pressure sensors, MEMS humidity sensors, MEMS clocks, and integrated products thereof.

An accelerometer is a meter for measuring linear acceleration of a carrier, and is widely used in industries such as consumer electronics, wearable devices, industrial automation, the automobile industry, and the aircraft industry. The MEMS accelerometers are the most widely used type of accelerometers, and are one of the earliest commercialized MEMS products. With emergence of fields such as the Internet of Things, industrial robots, and autonomous driving, there is an increasing demand for high-performance accelerometers. Currently, a common MEMS accelerometer is mainly used in the field of consumer electronics. Parameters such as a bias and a scale factor of the MEMS accelerometer cannot meet requirements of high-end applications such as an industrial application and an in-vehicle application.

### SUMMARY

This application provides an accelerometer, an inertial measurement unit IMU, and an electronic device. A first anchor region is located at a central position of a first axis accelerometer, to help improve a degree of freedom around a movable structure in the accelerometer, thereby helping reduce temperature coefficients of parameters such as a bias and a scale factor of the accelerometer, and improve stability of a component.

According to a first aspect, an accelerometer is provided, including an upper cover layer, a first axis accelerometer, and a substrate layer. The first axis accelerometer is located between the upper cover layer and the substrate layer

The first axis accelerometer includes a first anchor region, a cantilever beam, a first proof mass, a first movable electrode, a second movable electrode, a first fixed electrode, a second fixed electrode, a second anchor region, and a third anchor region.

One end of the cantilever beam is connected to the first anchor region; and the other end thereof is connected to the first proof mass. The first proof mass is supported by the cantilever beam and suspended above the substrate layer

The first movable electrode is connected to the first proof mass. The first fixed electrode is connected to the second anchor region. The first movable electrode and the first fixed electrode form a first capacitor.

The second movable electrode is connected to the first proof mass. The second fixed electrode is connected to the third anchor region. The second movable electrode and the second fixed electrode form a second capacitor.

The first anchor region is connected to the substrate layer and/or the upper cover layer. The second anchor region is connected to the substrate layer and/or the upper cover layer. The third anchor region is connected to the substrate layer and/or the upper cover layer. The first anchor region is located at a central position of the first axis accelerometer

Therefore, in this embodiment of this application, the first anchor region is located at the central position of the first axis accelerometer, which can help improve a degree of freedom around the movable structure in the accelerometer. This can not only reduce process-induced stress introduced by an anchor in a manufacturing process of the accelerometer, but also reduce impact, on the movable structure, of thermal stress caused by a temperature change in a use process of the accelerometer, thereby helping reduce temperature coefficients of parameters such as a bias and a scale factor of the accelerometer, and improve stability of a component.

The movable structure is a structure that can move in a process in which the accelerometer performs a movement (for example, an accelerated movement, a decelerated movement, or a rotation), namely, a structure that can move relative to the upper cover layer, the substrate layer, or the like of the accelerometer. For example, the movable structure may be a structure such as a stress release structure, the cantilever beam, a proof mass, a movable electrode, or the like. This is not limited. In this embodiment of this application, the first anchor region is connected to the upper cover layer and/or the substrate layer, so that the movable structure in the accelerometer can be supported.

In some embodiments, the accelerometer may include a structure layer. The structure layer includes the foregoing first axis accelerometer. This is not limited in this application.

In this embodiment of this application, an anchor region (for example, the first anchor region, the second anchor region, or the third anchor region) may include at least one anchor. When the anchor region includes a plurality of anchors (includes two or more anchors), these anchors may be uniformly distributed in the anchor region, or uniformly distributed on an edge of the anchor region. In this way, in one aspect, the anchors in the anchor region can be more securely connected to the upper cover layer and/or the substrate layer; in another aspect, process-induced stress introduced by an anchor in a manufacturing process of the accelerometer can be reduced; and in still another aspect, impact, on a sensitive structure, of thermal stress caused by a temperature change in a use process of the accelerometer can be reduced.

With reference to the first aspect, in some implementations of the first aspect, the second anchor region and the third anchor region are located on a symmetry axis of the first axis accelerometer.

With reference to the first aspect, in some implementations of the first aspect, the second anchor region and the third anchor region are located on two sides of the first anchor region, respectively. Optionally, the second anchor region and the third anchor region may be located at same distances on the two sides of the first anchor region, respectively.

Therefore, in this embodiment of this application, the second anchor region and the third anchor region are located on the symmetry axis of the first axis accelerometer; and/or, the second anchor region and the third anchor region are located on the two sides of the first anchor region, respectively; or the second anchor region and the third anchor region are further located at same distances on the two sides of the first anchor region, respectively. This can help further improve the degree of freedom around the movable structure in the accelerometer, thereby helping reduce the temperature coefficients of the parameters such as the bias and the scale factor of the accelerometer, and improve the stability of the component.

In some embodiments, the first capacitor formed by the first movable electrode and the first fixed electrode and the second capacitor formed by the second movable electrode and the second fixed electrode may be symmetrically distributed on the two sides of the symmetry axis of the first axis accelerometer. This can help the first axis accelerometer form a symmetric structure, so that a capacitor structure can be enabled to generate more symmetric strain for stress, which facilitates differential detection of the first axis accelerometer.

With reference to the first aspect, in some implementations of the first aspect, the first fixed electrode is surrounded by the first proof mass; and/or the second fixed electrode is surrounded by the first proof mass. In other words, the first proof mass may be located around the first fixed electrode, and may be located around the second fixed electrode at the same time.

In this way, in one aspect, a directly opposite area of two electrode plates of the first capacitor and/or the second capacitor can be increased, thereby facilitating measurement of capacitance of the first capacitor and/or the second capacitor. In another aspect, this can further help improve the degree of freedom around the movable structure in the accelerometer, thereby helping reduce the temperature coefficients of the parameters such as the bias and the scale factor of the accelerometer, and improve the stability of the component.

With reference to the first aspect, in some implementations of the first aspect, the first anchor region is connected to the upper cover layer; the second anchor region is connected to the upper cover layer; and the third anchor region is connected to the upper cover layer.

In this implementation, optionally, the first anchor region may be further connected to the substrate layer; the second anchor region may be further connected to the substrate layer; or the third anchor region may be further connected to the substrate layer. This is not limited. In addition, a manner of connecting the anchor region to the substrate layer is not limited herein, either.

The upper cover layer includes a first conductive column, a second conductive column, and a third conductive column. The accelerometer further includes:
a first bonding electrode, configured to connect the first conductive column to the first anchor region;
a second bonding electrode, configured to connect the second conductive column to the second anchor region; and
a third bonding electrode, configured to connect the third conductive column to the third anchor region, where
the first conductive column, the second conductive column, and the third conductive column are connected to different electrodes, respectively.

Therefore, in this embodiment of this application, in one aspect, a fixed connection between the upper cover layer and the structure layer may be implemented by using the bonding electrode; and in another aspect, an electrical signal in the structure layer (for example, the first axis accelerometer) may be led out to a surface of the upper cover layer by using the bonding electrode and the conductive column, and the electrical signal on the surface of the upper cover layer may be further led out by using the electrode, so that capacitance of the first capacitor and/or the second capacitor may be measured by using the electrode, thereby determining, based on detected capacitance, acceleration measured by the first axis accelerometer

With reference to the first aspect, in some implementations of the first aspect, the first conductive column, the second conductive column, and the third conductive column are separately manufactured by using a through silicon via process.

With reference to the first aspect, in some implementations of the first aspect, the first anchor region is connected to the substrate layer; the second anchor region is connected to the substrate layer; and the third anchor region is connected to the substrate layer.

In this implementation, optionally, the first anchor region may be further connected to the upper cover layer; the second anchor region may be further connected to the upper cover layer; or the third anchor region may be further connected to the upper cover layer. This is not limited. In addition, a manner of connecting the anchor region to the upper cover layer is not limited herein, either.

The accelerometer further includes an insulation layer located between the first axis accelerometer and the substrate layer, a fifth bonding electrode, a sixth bonding electrode, and a seventh bonding electrode. The fifth bonding electrode is configured to connect to the first anchor region. The sixth bonding electrode is configured to connect to the second anchor region. The seventh bonding electrode is configured to connect to the third anchor region. The fifth bonding electrode, the sixth bonding electrode, and the seventh bonding electrode are connected to different electrodes, respectively.

The fifth bonding electrode is located on the insulation layer (for example, located on a surface of the insulation layer) or wrapped in the insulation layer. The sixth bonding electrode is located on the insulation layer (for example, located on the surface of the insulation layer) or wrapped in the insulation layer. The seventh bonding electrode is located on the insulation layer (for example, located on the surface of the insulation layer) or wrapped in the insulation layer.

As a possible implementation, a bonding electrode (for example, the fifth bonding electrode, the sixth bonding electrode, or the seventh bonding electrode) may be connected, by using a conducting wire, to an electrode corresponding to the bonding electrode. For example, the conducting wire may be laid on a surface of the insulation layer or wrapped in the insulation layer. This is not limited in this application.

As a possible implementation, the insulation layer located between the first axis accelerometer and the substrate layer may be connected to the substrate layer (that is, in surface contact with each other). This is not limited in this application.

In this way, in one aspect, the substrate layer and the structure layer may be connected by using the bonding electrode; and in another aspect, the bonding electrode may be connected to an electrode, to lead out an electrical signal in the structure layer (for example, the first axis accelerometer) to the electrode that is connected to the bonding electrode. Therefore, capacitance of the first capacitor and/or the second capacitor can be detected by using these electrodes; and the acceleration measured by the first axis accelerometer can be determined based on the detected capacitance.

With reference to the first aspect, in some implementations of the first aspect, the accelerometer further includes a second axis accelerometer. A sensitive axis of the second axis accelerometer is orthogonal to a sensitive axis of the first axis accelerometer. Structures of the second axis accelerometer and the first axis accelerometer are the same. In this way, the accelerometer may simultaneously detect acceleration in two directions that are mutually orthogonal in a plane. Optionally, the structure layer may include the second axis accelerometer. This is not limited in this application.

With reference to the first aspect, in some implementations of the first aspect, the accelerometer further includes a third axis accelerometer. The third axis accelerometer includes a fourth anchor region, a torsion beam, a second proof mass, and a fixed electrode. The fourth anchor region is connected to the substrate layer and/or the upper cover layer. The torsion beam is connected to the fourth anchor region and is connected to the second proof mass. A centroid of the second proof mass deviates from the fourth anchor region. The second proof mass and the fixed electrode form a third capacitor.

Optionally, the structure layer may include part of a structure of the third axis accelerometer, for example, the fourth anchor region, the torsion beam, and the second proof mass. This is not limited in this application.

In this way, in this embodiment of this application, the accelerometer can detect acceleration in three-dimensional directions.

With reference to the first aspect, in some implementations of the first aspect, the fourth anchor region is connected to the upper cover layer; and the fixed electrode is located on the upper cover layer. In this implementation, optionally, the fourth anchor region may be further connected to the substrate layer. This is not limited.

The upper cover layer further includes a fourth conductive column. The accelerometer further includes a fourth bonding electrode. The fourth bonding electrode is configured to connect the fourth conductive column to the fourth anchor region. The fixed electrode and the fourth conductive column are connected to different electrodes, respectively.

In this way, in one aspect, a fixed connection between the upper cover layer and the structure layer may be implemented by using the bonding electrode; and in another aspect, an electrical signal in the structure layer (for example, the third axis accelerometer) may be led out to a surface of the upper cover layer by using the bonding electrode and the conductive column, and the electrical signal on the surface of the upper cover layer may be further led out by using the electrode, so that capacitance of the third capacitor may be measured by using the electrode, thereby determining, based on detected capacitance, acceleration measured by the third axis accelerometer.

With reference to the first aspect, in some implementations of the first aspect, the fourth conductive column is manufactured by using the through silicon via process.

In some embodiments, an insulation ring may be further manufactured around a conductive column (for example, the first conductive column, the second conductive column, the third conductive column, or the fourth conductive column). The insulation ring is configured to electrically isolate the conductive column from another surrounding region.

In some embodiments, the fixed electrode may also be manufactured on the upper cover layer by using the through silicon via process. This helps reduce parasitic capacitance of the third capacitor, thereby reducing a noise level of the accelerometer, and simplifying a manufacturing process.

In some embodiments, an insulation ring may be further manufactured around the fixed electrode. The insulation ring is configured to electrically isolate the fixed electrode from another surrounding region.

With reference to the first aspect, in some implementations of the first aspect, the fourth anchor region is connected to the substrate layer; the accelerometer further includes an eighth bonding electrode and the insulation layer that is located between the first axis accelerometer and the substrate layer; the eighth bonding electrode is configured to connect to the fourth anchor structure; the eighth bonding electrode is located on the insulation layer or wrapped in the insulation layer; and the fixed electrode and the eighth bonding electrode are connected to different electrodes, respectively.

In this implementation, optionally, the fourth anchor region may be further connected to the upper cover layer. This is not limited.

As a possible implementation, the eighth bonding electrode and a corresponding electrode may be connected by using a conducting wire; and the fixed electrode plate and a corresponding electrode may be connected by using a conducting wire. For example, the conducting wire herein may be laid on a surface of the insulation layer or wrapped in the insulation layer. This is not limited in this application.

In this way, in one aspect, the substrate layer and the structure layer may be connected by using the bonding electrode; and in another aspect, the electrical signal in the third axis accelerometer can be led out to an electrode by connecting the bonding electrode and the fixed electrode to different electrodes, respectively. Therefore, in this embodiment of this application, capacitance of the third capacitor can be detected, so that the acceleration measured by the third axis accelerometer can be determined based on the detected capacitance.

With reference to the first aspect, in some implementations of the first aspect, the torsion beam is of a foldable structure. In this embodiment of this application, stress on the torsion beam can be effectively released by setting the torsion beam to the foldable structure, thereby helping further reduce impact of the stress on a sensitive structure on the third axis accelerometer, and improve stability of the accelerometer.

With reference to the first aspect, in some implementations of the first aspect, a quantity of third axis accelerometers is an even number; and at least two of the third axis accelerometers are symmetrically disposed on two sides of the second axis accelerometer. As an example, the even quantity of third axis accelerometers may be symmetrically disposed on two sides of a long symmetry axis of the second axis accelerometer or two sides of a short symmetry axis of the second axis accelerometer. This is not limited.

Therefore, in this embodiment of this application, the even quantity of third axis accelerometers are symmetrically disposed on the two sides of the second axis accelerometer to help the accelerometer form a symmetric structure, thereby enabling the accelerometer to generate more symmetric strain for stress, and helping differential detection of a signal of the accelerometer

It should be noted that in this application, the long symmetry axis or the short symmetry axis is described for a case in which an accelerometer (for example, the first axis accelerometer or the second axis accelerometer) takes the shape of a rectangle and is of a symmetric structure. For example, the long symmetry axis of the second axis accelerometer is a symmetry axis in a length direction of the second axis accelerometer; and the short symmetry axis of the second axis accelerometer is a symmetry axis in a width direction of the second axis accelerometer.

With reference to the first aspect, in some implementations of the first aspect, the accelerometer further includes an internal frame. The internal frame is provided with at least one fifth anchor region. The fifth anchor region is connected to the substrate layer and/or the upper cover layer. At least one of the first axis accelerometer, the second axis accelerometer, and the third axis accelerometer is disposed in the internal frame.

Therefore, in this embodiment of this application, impact that is of thermal expansion and stress of different structures and that is on a change of spacing between the second proof mass and the fixed electrode can be reduced by designing, on the internal frame, the fifth anchor region that is securely connected to the upper cover layer and/or the substrate layer

With reference to the first aspect, in some implementations of the first aspect, the first axis accelerometer further includes a stress isolation structure; and the stress isolation structure is configured to connect the cantilever beam to the first anchor region. In this embodiment of this application, the stress isolation structure can reduce or release stress on the cantilever beam that is coupled to the first anchor region through the stress isolation structure.

With reference to the first aspect, in some implementations of the first aspect, a quantity of cantilever beams is an even number; and at least two of the cantilever beams are symmetrically disposed on two sides of the symmetry axis of the first axis accelerometer

Therefore, in this embodiment of this application, the stress isolation structures are symmetrically distributed on the first axis accelerometer to help the first axis accelerometer form a symmetric structure, thereby helping the stress isolation structure generate more symmetric strain for stress, and facilitating differential detection of the first axis accelerometer.

In some embodiments, the accelerometer may further include a package ring, located between the upper cover layer and the structure layer and configured to bond with the upper cover layer and the structure layer, to implement a fixed connection between the upper cover layer and the structure layer. As an example, the package ring may be gold, copper, or the like. This is not limited.

In some embodiments, the accelerometer may further include an insulation layer, located between the structure layer and the substrate layer and configured to bond with the structure layer and the substrate layer, to implement a fixed connection between the structure layer and the substrate layer. As an example, the insulation layer may be SiO₂. This is not limited.

Therefore, in this embodiment of this application, the package ring and/or the insulation layer are/is disposed to help the accelerometer form a closed cavity, thereby providing a stable operating environment for the structure layer, and facilitating reliability improvement of the accelerometer.

According to a second aspect, an accelerometer is provided, including an upper cover layer, a first axis accelerometer, a second axis accelerometer, a third axis accelerometer, and a substrate layer. The first axis accelerometer and the second axis accelerometer are located in a structure layer. The structure layer is located between the upper cover layer and the substrate layer

The first axis accelerometer includes a first anchor region, a cantilever beam, a first proof mass, a first movable electrode, a second movable electrode, a first fixed electrode, a second fixed electrode, a second anchor region, and a third anchor region. One end of the cantilever beam is connected to the first anchor region; and the other end thereof is connected to the first proof mass. The first proof mass is supported by the cantilever beam and suspended above the substrate layer. The first movable electrode is connected to the first proof mass. The first fixed electrode is connected to the second anchor region. The first movable electrode and the first fixed electrode form a first capacitor. The second movable electrode is connected to the first proof mass. The second fixed electrode is connected to the third anchor region. The second movable electrode and the second fixed electrode form a second capacitor.

The first anchor region is connected to the substrate layer and/or the upper cover layer. The second anchor region is connected to the substrate layer and/or the upper cover layer. The third anchor region is connected to the substrate layer and/or the upper cover layer. The first anchor region is located at a central position of the first axis accelerometer

A sensitive axis of the second axis accelerometer is orthogonal to a sensitive axis of the first axis accelerometer. Structures of the second axis accelerometer and the first axis accelerometer are the same.

The accelerometer includes a fourth anchor region, a torsion beam, a second proof mass, and a fixed electrode. The fourth anchor region, the torsion beam, and the second proof mass are located in the structure layer. The fourth anchor region is connected to the substrate layer and/or the upper cover layer. The torsion beam is connected to the fourth anchor region and is connected to the second proof mass. A centroid of the second proof mass deviates from the fourth anchor region. The second proof mass and the fixed electrode form a third capacitor.

With reference to the second aspect, in some implementations of the second aspect, the second anchor region and the third anchor region are located on a symmetry axis of the first axis accelerometer

With reference to the second aspect, in some implementations of the second aspect, the second anchor region and the third anchor region are located on two sides of the first anchor region, respectively. Optionally, the second anchor region and the third anchor region are located at same distances on the two sides of the first anchor region, respectively.

With reference to the second aspect, in some implementations of the second aspect, the first fixed electrode is surrounded by the first proof mass; and/or the second fixed electrode is surrounded by the first proof mass.

With reference to the second aspect, in some implementations of the second aspect, the first anchor region is connected to the upper cover layer; the second anchor region is connected to the upper cover layer; and the third anchor region is connected to the upper cover layer

The upper cover layer includes a first conductive column, a second conductive column, and a third conductive column. The accelerometer further includes:
a first bonding electrode, configured to connect the first conductive column to the first anchor region;
a second bonding electrode, configured to connect the second conductive column to the second anchor region; and
a third bonding electrode, configured to connect the third conductive column to the third anchor region, where
the first conductive column, the second conductive column, and the third conductive column are connected to different electrodes, respectively.

With reference to the second aspect, in some implementations of the second aspect, the first conductive column, the second conductive column, and the third conductive column are separately manufactured by using a through silicon via process.

With reference to the second aspect, in some implementations of the second aspect, the first anchor region is connected to the substrate layer; the second anchor region is connected to the substrate layer; and the third anchor region is connected to the substrate layer

The accelerometer further includes an insulation layer located between the first axis accelerometer and the substrate layer, a fifth bonding electrode, a sixth bonding electrode, and a seventh bonding electrode. The fifth bonding electrode is configured to connect to the first anchor region. The sixth bonding electrode is configured to connect to the second anchor region. The seventh bonding electrode is configured to connect to the third anchor region. The fifth bonding electrode, the sixth bonding electrode, and the seventh bonding electrode are connected to different electrodes, respectively.

The fifth bonding electrode is located on the insulation layer or wrapped in the insulation layer. The sixth bonding electrode is located on the insulation layer or wrapped in the insulation layer. The seventh bonding electrode is located on the insulation layer or wrapped in the insulation layer.

With reference to the second aspect, in some implementations of the second aspect, the fourth anchor region is connected to the upper cover layer; and the fixed electrode is located on the upper cover layer. The upper cover layer further includes a fourth conductive column. The accelerometer further includes a fourth bonding electrode. The fourth bonding electrode is configured to connect the fourth conductive column to the fourth anchor region. The fixed electrode and the fourth conductive column are connected to different electrodes, respectively.

With reference to the second aspect, in some implementations of the second aspect, the fourth conductive column is manufactured by using the through silicon via process.

With reference to the second aspect, in some implementations of the second aspect, the fourth anchor region is connected to the substrate layer; the accelerometer further includes an eighth bonding electrode and the insulation layer that is located between the first axis accelerometer and the substrate layer; the eighth bonding electrode is configured to connect to the fourth anchor structure; the eighth bonding electrode is located on the insulation layer or wrapped in the insulation layer; and the fixed electrode and the eighth bonding electrode are connected to different electrodes, respectively.

With reference to the second aspect, in some implementations of the second aspect, the torsion beam is of a foldable structure.

With reference to the second aspect, in some implementations of the second aspect, a quantity of third axis accelerometers is an even number; and at least two of the third axis accelerometers are symmetrically disposed on two sides of the second axis accelerometer.

With reference to the second aspect, in some implementations of the second aspect, the accelerometer further includes an internal frame. The internal frame is provided with at least one fifth anchor region. The fifth anchor region is connected to the substrate layer and/or the upper cover layer. The first axis accelerometer, the second axis accelerometer, and the third axis accelerometer are disposed in the internal frame.

With reference to the second aspect, in some implementations of the second aspect, the first axis accelerometer further includes a stress isolation structure; and the stress isolation structure is configured to connect a first end of the cantilever beam to the first anchor region.

With reference to the second aspect, in some implementations of the second aspect, a quantity of cantilever beams is an even number, and at least two of the cantilever beams are symmetrically disposed on two sides of the symmetry axis of the first axis accelerometer

With reference to the second aspect, in some implementations of the second aspect, the upper cover layer is bonded to the structure layer by using a package ring.

With reference to the second aspect, in some implementations of the second aspect, the substrate layer is securely connected to the structure layer by using the insulation layer

According to a third aspect, an inertial measurement unit IMU is provided, including the accelerometer according to the first aspect or any one of the possible implementations of the first aspect, a gyroscope, and a signal processing chip.

The accelerometer is configured to obtain linear acceleration of a motion object.

The gyroscope is configured to obtain a rotation signal of the motion object.

The signal processing chip is configured to: determine linear motion information of the motion object based on the linear acceleration, and determine rotation information of the motion object based on the rotation signal.

According to a fourth aspect, an inertial measurement unit IMU is provided, including the accelerometer according to the second aspect or any one of the possible implementations of the second aspect, a gyroscope, and a signal processing chip.

The accelerometer is configured to obtain linear acceleration of a motion object.

The gyroscope is configured to obtain a rotation signal of the motion object.

The signal processing chip is configured to: determine linear motion information of the motion object based on the linear acceleration, and determine rotation information of the motion object based on the rotation signal.

According to a fifth aspect, an electronic device is provided, including the IMU according to the third aspect or the fourth aspect and a processor. The IMU is configured to obtain linear motion information and rotation information of a motion object. The processor is configured to determine information about a position and a posture of the motion object based on the linear motion information and the rotation information.

With reference to the fifth aspect, in some implementations of the fifth aspect, the electronic device further includes a global positioning system GPS/BeiDou module, configured to obtain position information of the motion object in a terrestrial coordinate system.

The processor is specifically configured to determine the information about the position and the posture of the motion object based on the linear motion information, the rotation information, and the position information in the terrestrial coordinate system.

It should be understood that for beneficial effects achieved in the second aspect to the fifth aspect of this application and the corresponding implementations, reference may be made to the beneficial effects achieved in the first aspect of this application and the corresponding implementations. Details are not described again.

### BRIEF DESCRIPTION OF DRAWINGS

FIG. 1 is a schematic block diagram of an IMU according to an embodiment of this application;
FIG. 2 is a schematic block diagram of an electronic device according to an embodiment of this application;
FIG. 3 is a schematic diagram of a structure of an accelerometer according to an embodiment of this application;
FIG. 4 shows an example of an anchor region;
FIG. 5 shows an example of an accelerometer according to an embodiment of this application;
FIG. 6 shows an example of a torsion beam of a foldable structure;
FIG. 7 shows an example of a side view of an accelerometer according to an embodiment of this application;
FIG. 8 shows another example of a side view of an accelerometer according to an embodiment of this application; and
FIG. 9 shows an example of results of simulation of temperatures and biases of accelerometers of different structures.

### DESCRIPTION OF EMBODIMENTS

The following describes technical solutions of this application with reference to accompanying drawings.

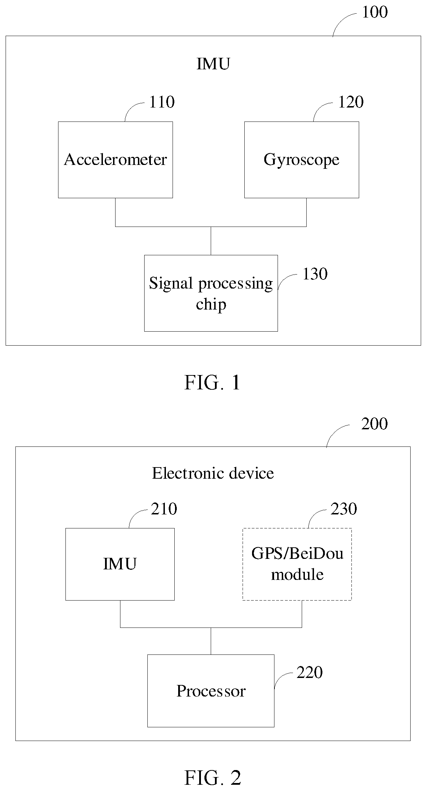

FIG. 1 is a schematic block diagram of an inertial measurement unit (inertial measurement unit, IMU) 100 according to an embodiment of this application. As shown in FIG. 1, the IMU 100 may include an accelerometer 110, a gyroscope 120, and a signal processing chip 130. The accelerometer 110 is configured to obtain linear acceleration (which may also be referred to as an accelerometer signal) of a motion object (which may also be referred to as a motion vehicle). The gyroscope 120 is configured to obtain a rotation signal (which may also be referred to as a gyroscope signal) of the motion object. The signal processing chip 130 is configured to: obtain the linear acceleration from the accelerometer 110, and determine linear motion information of the motion object based on the linear acceleration; and obtain the rotation signal from the gyroscope 120, and determine rotation information of the motion object based on the rotation signal.

For example, the accelerometer 110 may measure the linear acceleration of the motion object in real time. The signal processing chip 130 may obtain, in real time, the linear acceleration obtained by the accelerometer 110, and perform integration on the obtained linear acceleration to obtain the linear motion information. The gyroscope 120 may measure the rotation signal of the motion object in real time. The signal processing chip 130 may obtain, in real time, the rotation signal obtained by the gyroscope 120, and perform integration on the obtained rotation signal to obtain the rotation information.

As an example, the accelerometer 110 may be a tri-axial accelerometer; and the gyroscope may be a tri-axial gyroscope. This is not limited in this application.

FIG. 2 is a schematic block diagram of an electronic device 200 according to an embodiment of this application. The electronic device 200 may be configured to position a motion object, and may also be configured to monitor a posture of an instrument, a robotic arm, or the like. This is not limited in this application.

As shown in FIG. 2, the electronic device 200 may include an IMU 210 and a processor 220. The IMU 200 may be configured to obtain linear motion information and rotation information of the motion object. The processor 200 may be configured to determine information about a position and a posture of the motion object based on the linear motion information and the rotation information. The processor 200 may obtain the linear motion information and the rotation information of the motion object from the IMU 200. As an example, the IMU 200 may be the IMU 100 in FIG. 1. This is not limited in this embodiment of this application.

For example, the electronic device 200 may be an inertial navigation system (inertial navigation system, INS), namely, an auxiliary navigation system that may use an accelerometer and a gyroscope to measure acceleration and an angular velocity of an object, and use a computer to continuously estimate a position, a posture, and a speed of a moving object. The INS may directly measure motion status of the motion object, and calculate position information of the motion object without requiring an external signal, thereby having a high degree of autonomy.

Still refer to FIG. 2. Optionally, the electronic device 200 may further include a global positioning system (global positioning system, GPS)BeiDou module 230. The GPS/BeiDou module 230 may be configured to obtain position information of the motion object in a terrestrial coordinate system. For example, the GPS/BeiDou module 230 may calculate, by receiving a signal (for example, a GPSBeiDou signal) emitted by a satellite, the position information of the motion object in the terrestrial coordinate system. In this case, the processor 220 may be specifically configured to determine the information about the position and the posture of the motion object based on the linear motion information and the rotation information that are obtained from the IMU and the position information obtained from the GPS/BeiDou module 230. In other words, the processor 220 may perform joint resolving on data obtained by the IMU 210 and data obtained by the GPS/BeiDou module 230, to perform positioning. For example, during calculation of a rate and a position based on the accelerometer signal obtained by the IMU 210, combined filtering may be performed by using a GPS/BeiDou signal having a matched refresh rate, thereby providing a refresh rate of positioning data of the navigation system.

For example, the electronic device 200 may be a GPSBeiDou-assisted INS, and may accurately learn positioning of the motion object in a driving process of the motion object, to implement applications such as an autonomous navigation application and an unmanned driving application. The GPSBeiDou-assisted INS is a positioning system integrating a global satellite positioning network and an INS. Compared with a single GPSBeiDou module 230, because the GPSBeiDou-assisted INS integrates the INS, the GPS/BeiDou-assisted INS is less susceptible to factors such as a tunnel, a high building, and severe weather, so that real-time positioning can be implemented. For example, when a GPS/BeiDou signal is blocked or signal strength is weak, the GPSBeiDou-assisted INS may resolve position information by using only an acceleration signal or a gyroscope signal, to perform real-time autonomous positioning.

In the IMU 100 in FIG. 1 or the IMU 210 in FIG. 2, the accelerometer may be an MEMS monolithic accelerometer chip. In other words, the MEMS monolithic accelerometer chip is mounted in the IMU as a component, to sense linear motion information in an environment of the IMU in real time. For example, the MEMS monolithic accelerometer chip may be an MEMS tri-axial accelerometer chip, an MEMS bi-axial accelerometer chip, or an MEMS uni-axial accelerometer chip. This is not limited.

In some embodiments, the accelerometer may alternatively be used independently. For example, the accelerometer may be placed in a gravity field. The accelerometer may measure gravitational acceleration components in different sensitive axis directions, and obtain a tilt angle of a measured object via calculation based on the gravitational acceleration components in the different sensitive axis directions.

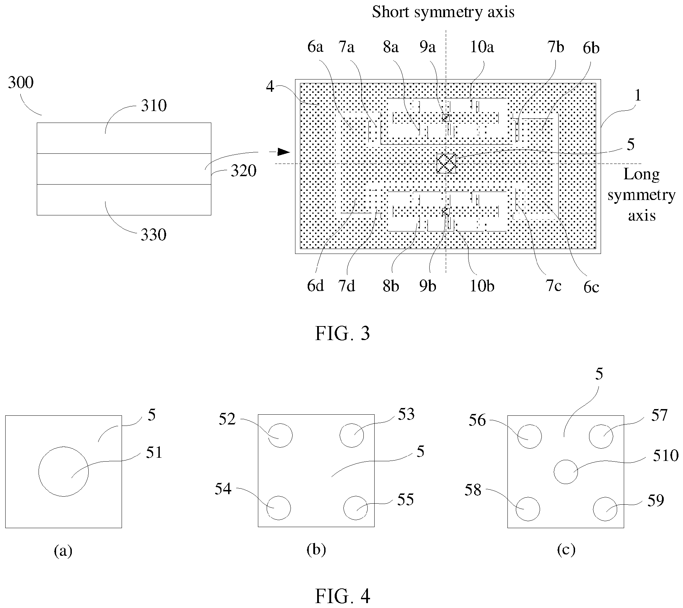

FIG. 3 is a schematic diagram of a structure of an accelerometer 300 according to an embodiment of this application. The accelerometer 300 may be an MEMS monolithic accelerometer. In this application, the accelerometer is a capacitive accelerometer, and mainly includes structures such as a proof mass (also referred to as a sensitive mass), a cantilever beam, an anchor region, and a capacitive electrode. Optionally, the accelerometer 300 may further include another structure. This is not limited in this application.

As an example, as shown in FIG. 3, the accelerometer 300 is of a three-layer structure, including an upper cover layer 310, a structure layer (which may also be referred to as an MEMS structure layer) 320, and a substrate layer 330. The structure layer 320 is located between the upper cover layer 310 and the substrate layer 330. The structure layer 320 may include the structure of the accelerometer, such as the proof mass (also referred to as a sensitive mass), the cantilever beam, the anchor region, and the capacitive electrode.

It should be noted that, this embodiment of this application is described by using an example in which the accelerometer is of the three-layer structure. However, this embodiment of this application is not limited thereto. For example, the accelerometer 300 may be further described as: including an upper cover layer, a first axis accelerometer, a substrate layer, and another structure. This is not limited.

In this embodiment of this application, the structure layer 320 includes at least one accelerometer, for example, at least one of the first axis accelerometer and a second axis accelerometer. For example, the first axis accelerometer and the second axis accelerometer may be two accelerometers whose sensitive axes are orthogonal to each other. For example, the first axis accelerometer and the second axis accelerometer are an x-axis accelerometer and a y-axis accelerometer, respectively.

In some embodiments, the first axis accelerometer and the second axis accelerometer may have a same structure.

Optionally, the accelerometer 300 may further include a third axis accelerometer. A sensitive axis of the third axis accelerometer is orthogonal to the first axis accelerometer and/or the second axis accelerometer. The third axis accelerometer may be, for example, a z-axis accelerometer. A partial structure (for example, a proof mass, a cantilever beam, and an anchor region) of the z-axis accelerometer may be included in the structure layer 320. A fixed electrode plate may be located above or below the structure layer. This is not limited.

In some embodiments, the first axis accelerometer and the second axis accelerometer may be accelerometers on a detection surface of the accelerometer 300; and the third axis accelerometer may be an accelerometer outside the detection surface of the accelerometer 300. This is not limited in this application.

Still refer to FIG. 3. For example, the structure layer 320 of the accelerometer 300 includes a first axis accelerometer 1. The first axis accelerometer 1 may include a first anchor region 5, cantilever beams (for example, 7a, 7b, 7c, and 7c), a first proof mass 4, a first movable electrode 10a, a second movable electrode 10b, a first fixed electrode 8a, a second fixed electrode 8b, a second anchor region 9a, and a third anchor region 9b.

The first anchor region 5, the second anchor region 9a, and the third anchor region 9c are separately connected to the substrate layer 330 and/or the upper cover layer 310. The first anchor region 5, the second anchor region 9a, and the third anchor region 9c can be secured to the substrate layer and/or the upper cover layer by connecting the first anchor region 5, the second anchor region 9a, and the third anchor region 9c to the substrate layer and/or the upper cover layer. In this way, when the accelerometer 300 moves at a same rate as a motion object (in other words, when acceleration is input to the accelerometer 300 from the outside), positions of the first anchor region 5, the second anchor region 9a, and the third anchor region 9c can remain unchanged relative to the substrate layer 330 or the upper cover layer 310 in the accelerometer 300.

Specifically, the first anchor region 5, the second anchor region 9a, and the third anchor region 9c are separately connected to the substrate layer 330 and/or the upper cover layer 310. To be specific, the first anchor region 5 is connected to the substrate layer 330 and/or the upper cover layer 310; the second anchor region 9a is connected to the substrate layer 330 and/or the upper cover layer 310; and the third anchor region 9c is connected to the substrate layer 330 and/or the upper cover layer 310.

In this embodiment of this application, one end of the cantilever beam is connected to the first anchor region 5; and the other end thereof is connected to the first proof mass 4. The first proof mass 4 is supported by the cantilever beam and suspended above the substrate layer 330. In other words, the cantilever beam can support the first proof mass 4. For example, the cantilever beam may also be referred to as a spring beam. This is not limited.

In this way, when the accelerometer 300 moves at the same rate as the motion object, the first proof mass 4 senses a component, in a direction of a sensitive axis of the first axis accelerometer 1, of acceleration of the motion object, and generates displacement in the direction of the sensitive axis. In other words, the first proof mass 4 can sense an acceleration change of the motion object and generate displacement, on the detection surface, relative to the substrate layer 330 or the upper cover layer 310.

In some embodiments, the cantilever beam on the first axis accelerometer 1 may be designed to have small rigidity in the direction of the sensitive axis of the first axis accelerometer 1. In this way, large deformation can be generated when force is applied to the cantilever beam, so that the first proof mass 4 can generate a large displacement in response to an acceleration component in the sensitive axis of the first axis accelerometer 1.

As shown in FIG. 3, the first proof mass 4 may be uniformly distributed around the first axis accelerometer 1. Alternatively, in other embodiments, the first proof mass 4 may be distributed on two sides of the first axis accelerometer, for example, a left side and a right side, or an upper side and a lower side. This is not limited in this application.

It should be noted that a quantity of cantilever beams is not limited in this embodiment of this application.

Optionally, the quantity of cantilever beams may be an even number, for example, 2, 4, or 6. This is not limited. Further, the even quantity of cantilever beams may be symmetrically distributed on the first axis accelerometer 1.

As a specific example, there are four cantilever beams in FIG. 3, namely, 7a, 7b, 7c, and 7d. The four cantilever beams are separately located around the first anchor region 5. For example, two cantilever beams may be symmetrically distributed on each of two sides of a long symmetry axis of the first axis accelerometer 1 (or this may alternatively be described as: two cantilever beams are symmetrically distributed on each of two sides of a short symmetry axis of the first axis accelerometer 1).

As another specific example, there may be two cantilever beams. The two cantilever beams may be located at same distances on two sides of the first anchor region 5, respectively. For example, the two cantilever beams may be symmetrically distributed on the two sides of the long symmetry axis of the first axis accelerometer 1; or the two cantilever beams may be symmetrically distributed on the two sides of the short symmetry axis of the first axis accelerometer 1.

It should be noted that in this embodiment of this application, the long symmetry axis or the short symmetry axis is described for a case in which an accelerometer (for example, the first axis accelerometer or the second axis accelerometer) takes the shape of a rectangle and is of a symmetric structure. For example, the long symmetry axis of the first axis accelerometer 1 is a symmetry axis in a length direction of the first axis accelerometer 1; and the short symmetry axis of the first axis accelerometer 1 is a symmetry axis in a width direction of the first axis accelerometer 1. For another example, the long symmetry axis of the second axis accelerometer is a symmetry axis in a length direction of the second axis accelerometer; and the short symmetry axis of the second axis accelerometer is a symmetry axis in a width direction of the second axis accelerometer.

As a specific example, FIG. 3 shows an example of the long symmetry axis and the short symmetry axis. The first axis accelerometer 1 is bilaterally symmetrical about the short symmetry axis, and is longitudinally symmetrical about the long symmetry axis. In some other embodiments, when the shape of the first axis accelerometer 1 is a square, and the first axis accelerometer 1 is of a symmetric structure, a symmetry axis of the first axis accelerometer 1 does not need to be distinguished as a long symmetry axis or a short symmetry axis.

Therefore, in this embodiment of this application, the cantilever beams are symmetrically distributed on the first axis accelerometer 1 to help the first axis accelerometer 1 form a symmetric structure, thereby helping the cantilever beams generate more symmetric strain for stress, and facilitating differential detection of the first axis accelerometer 1.

It should be noted that, in this embodiment of this application, a case in which one structure (or some structures) in the first axis accelerometer 1 is (or are) symmetrical includes not only a case in which the structure (or these structures) is (or are) symmetrically distributed on the first axis accelerometer 1 strictly, but also a case in which the structure (or these structures) is (or are) symmetrically distributed on the first axis accelerometer 1 approximately.

As a possible implementation, the cantilever beam may be directly connected to the first anchor region 5, so that one end of the cantilever beam is fixed.

As another possible implementation, one end of the cantilever beam may be connected to the first anchor region 5 by using a stress isolation structure, so that the end of the cantilever beam is fixed. For example, each stress isolation structure may correspond to one cantilever beam; and the stress isolation structure may be distributed between the first anchor region 5 and the cantilever beam corresponding to the stress isolation structure.

Refer to FIG. 3. The first axis accelerometer 1 may further include stress isolation structures 6a, 6b, 6c, and 6d. The stress isolation structure 6a is configured to connect the cantilever beam 7a to the first anchor region 5. The stress isolation structure 6b is configured to connect the cantilever beam 7b to the first anchor region 5. The stress isolation structure 6c is configured to connect the cantilever beam 7c to the first anchor region 5. The stress isolation structure 6d is configured to connect the cantilever beam 7d to the first anchor region 5. In this embodiment of this application, the stress isolation structure may be configured to reduce or release stress on the cantilever beam that is coupled to the first anchor region 5 through the stress isolation structure.

Optionally, a quantity of stress isolation structures may be an even number. Further, the even quantity of stress isolation structures may be symmetrically distributed on the first axis accelerometer 1.

As a specific example, as shown in FIG. 3, when there are four stress isolation structures, each of the four stress isolation structures may be located between the stress isolation structure and the first anchor region 5; and two stress isolation structures are symmetrically distributed on each of the two sides of the long symmetry axis of the first axis accelerometer 1 (or this may alternatively be described as: two structures are symmetrically distributed on each of the two sides of the short symmetry axis of the first axis accelerometer 1).

As another specific example, when there are two stress isolation structures, each of the two stress isolation structures may be located between the stress isolation structure and the first anchor region 5, and the two stress isolation structures may be located at same distances on the two sides of the first anchor region 5, respectively. For example, the two cantilever beams may be symmetrically distributed on the two sides of the long symmetry axis of the first axis accelerometer 1; or the two cantilever beams may be symmetrically distributed on the two sides of the short symmetry axis of the first axis accelerometer 1.

Therefore, in this embodiment of this application, the stress isolation structures are symmetrically distributed on the first axis accelerometer 1 to help the first axis accelerometer 1 form a symmetric structure, thereby helping the stress isolation structure generate more symmetric strain for stress, and facilitating differential detection of the first axis accelerometer 1.

In FIG. 3, the first movable electrode 10a is connected to the first proof mass 4. Because the first proof mass 4 can sense an acceleration change of the motion object and generate displacement relative to the substrate layer 330 or the upper cover layer 310, the first movable electrode 10a can also sense the acceleration change of the motion object and generate displacement relative to the substrate layer 330 or the upper cover layer 310. The first fixed electrode 8a is connected to the second anchor region 9a. Therefore, when the accelerometer 300 moves at the same rate as the motion object, a position of the first fixed electrode 8a remains unchanged relative to the substrate layer 330 or the upper cover layer 310.

The first movable electrode 10a and the first fixed electrode 8a form a first capacitor (which may also be referred to as a first detection capacitor). It can be learned from the foregoing description that, when the accelerometer 300 moves at the same rate as the motion object, the first movable electrode 10a generates corresponding displacement, on the detection surface, relative to the substrate layer 330 or the upper cover layer 310, but the first fixed electrode 8a remains fixed relative to the substrate layer 330 or the upper cover layer 310. In this way, spacing between the first movable electrode 10a and the first fixed electrode 8a changes, leading to a capacitance change of the first capacitor. Therefore, acceleration input from the outside to the accelerometer 300 can be detected by detecting capacitance of the first capacitor. For example, a value of the component, in the direction of the sensitive axis of the first axis accelerometer 1, of the acceleration of the motion object can be determined.

Still refer to FIG. 3. The second movable electrode 10b is connected to the first proof mass 4. The second fixed electrode 8b is connected to the third anchor region 9b. The second movable electrode 10b and the second fixed electrode 8b form a second capacitor (which may also be referred to as a second detection capacitor). Similar to the first movable electrode 10a and the first fixed electrode 8a, the acceleration input from the outside to the accelerometer 300 can be detected by detecting capacitance of the second capacitor. For example, the value of the component, in the direction of the sensitive axis of the first axis accelerometer 1, of the acceleration of the motion object can be determined.

In some embodiments, capacitance of the first capacitor and the second capacitor may be detected at the same time; and the value of the component, in the direction of the sensitive axis of the first axis accelerometer 1, of the acceleration of the motion object is determined based on the capacitance of the first capacitor and the second capacitor. This is not limited in this application.

It may be understood that, because structures such as the stress release structure, the cantilever beam, the proof mass, the first movable electrode, and the second movable electrode are movable (that is, can generate displacement relative to the upper cover layer, the substrate layer, or the like of the accelerometer 300) in a process in which the accelerometer 300 performs movement (for example, accelerated movement, decelerated movement, or rotation), these structures may also be referred to as movable structures (or sensitive structures) in the accelerometer. In this embodiment of this application, the first anchor region 5 is connected to the upper cover layer and/or the substrate layer, so that the movable structure in the accelerometer can be supported.

In this embodiment of this application, the first anchor region 5 is located at a central position of the first axis accelerometer 1. In this way, a degree of freedom around the movable structure in the accelerometer can be improved. This can not only reduce process-induced stress introduced by an anchor in a manufacturing process of the accelerometer, but also reduce impact, on the movable structure, of thermal stress caused by a temperature change in a use process of the accelerometer, thereby helping reduce temperature coefficients of parameters such as a bias and a scale factor of the accelerometer, and improve stability of a component.

It should be noted that, in this embodiment of this application, that the first anchor region 5 is located at the central position of the first axis accelerometer 1 includes not only a case in which the first anchor region 5 is precisely located at the central position of the first axis accelerometer 1, but also a case in which the first anchor region 5 is approximately located at the central position of the first axis accelerometer 1. In other words, the first anchor region 5 may be disposed at the central position of the first axis accelerometer 1, or may be disposed slightly away from the central position of the first axis accelerometer 1, both of which fall within the protection scope of this embodiment of this application.

In this embodiment of this application, an anchor region (for example, the first anchor region 5, the second anchor region 9a, or the third anchor region 9c) may include at least one anchor. When the anchor region includes a plurality of anchors (includes two or more anchors), these anchors may be uniformly distributed in the anchor region, or uniformly distributed on an edge of the anchor region.

For example, refer to FIG. 4. Three examples of anchors included in the anchor region are described by using an example in which a shape of the first anchor region 5 is a square. As shown in FIG. 4(a), when the first anchor region 5 includes one anchor 51, the anchor 51 may be located at a central position of the first anchor region 5. As shown in FIG. 4(b), when the first anchor region 5 includes four anchors (which are an anchor 52, an anchor 53, an anchor 54, and an anchor 55, respectively), the four anchors may be distributed at four right angles of the first anchor region 5. As shown in FIG. 4(c), when the first anchor region 5 includes five anchors (which are an anchor 56, an anchor 57, an anchor 58, an anchor 59, and an anchor 510, respectively), one of the five anchors may be distributed in a center region of the first anchor region 5, and the remaining four anchors may be distributed at the four right angles of the first anchor region 5.

It should be noted that a shape of the central position or the central region is not limited in this embodiment of this application. The shape of the central position or the central region may be, for example, a circle, a rectangle, a rhombus, a triangle, a trapezoid, or a polygon, or may be some irregular shapes, all of which fall within the protection scope of this embodiment of this application. Optionally, the shape of the central position or the central region may be a symmetric shape.

It should be further noted that a size of the central position or the central region is not limited in this embodiment of this application.

Therefore, in this embodiment of this application, the plurality of anchors may be uniformly distributed in the anchor region, or uniformly distributed on edges of the anchor region. In one aspect, the anchors in the anchor region can be more securely connected to the upper cover layer and/or the substrate layer; in another aspect, process-induced stress introduced by an anchor in a manufacturing process of the accelerometer can be reduced; and in still another aspect, impact, on a sensitive structure, of thermal stress caused by a temperature change in a use process of the accelerometer can be reduced.

In some embodiments, the first capacitor formed by the first movable electrode 10a and the first fixed electrode 8a and the second capacitor formed by the second movable electrode 10b and the second fixed electrode 8b may be symmetrically distributed on the two sides of the symmetry axis of the first axis accelerometer 1. This is not limited in this application. For example, in FIG. 3, the first capacitor formed by the first movable electrode 10a and the first fixed electrode 8a is located above the first anchor region 5; and the second capacitor formed by the second movable electrode 10b and the second fixed electrode 8b is located below the first anchor region 5, and is symmetrical about the long symmetry axis of the first axis accelerometer 1.

Therefore, in this embodiment of this application, the two capacitors are symmetrically distributed on the first axis accelerometer 1 to help the first axis accelerometer 1 form a symmetric structure, thereby helping a capacitor structure generate more symmetric strain for stress, and facilitating differential detection of the first axis accelerometer 1.

Optionally, in some embodiments, the second anchor region 9a and the third anchor region 9b may be located on the symmetry axis of the first axis accelerometer 1. For example, as shown in FIG. 3, the second anchor region 9a, the first anchor region 5, and the third anchor region 9b may be sequentially located on the short symmetry axis of the first axis accelerometer 1. Alternatively, in some other embodiments, the second anchor region 9a, the first anchor region 5, and the third anchor region 9b may be sequentially located on the long symmetry axis of the first-axis acceleration 1. This is not limited in this application.

It should be noted that, in this embodiment of this application, that the second anchor region 9a and the third anchor region 9b are located on the symmetry axis of the first axis accelerometer 1 includes not only a case in which the second anchor region 9a and the third anchor region 9b are precisely located on the symmetry axis of the first axis accelerometer 1, but also a case in which the second anchor region 9a and the third anchor region 9b are approximately located on the symmetry axis of the first axis accelerometer 1. In other words, the second anchor region 9a and the third anchor region 9b may be disposed on the symmetry axis of the first axis accelerometer 1, or may be disposed slightly away from the symmetry axis of the first axis accelerometer 1, both of which fall within the protection scope of this embodiment of this application.

Optionally, in some embodiments, the second anchor region 9a and the third anchor region 9b may be located on the two sides of the first anchor region 5, respectively. As an example, the two sides of the first anchor region may be a left side and a right side, an upper side and a lower side, an upper right side and a lower left side, or an upper left side and a lower right side of the first anchor region. This is not limited in this application.

Optionally, the second anchor region 9a and the third anchor region 9b may be further located at same distances on the two sides of the first anchor region 5, respectively.

It should be noted that, in this embodiment of this application, that the second anchor region 9a and the third anchor region 9b are respectively located at same positions on the two sides of the first anchor region 5 includes not only a case in which the second anchor region 9a and the third anchor region 9b are accurately located at same positions on the two sides of the first anchor region 5, but also a case in which the second anchor region 9a and the third anchor region 9b are approximately located at same positions on the two sides of the first anchor region 5. In other words, the second anchor region 9a and the third anchor region 9b may be disposed at same positions on the two sides of the first anchor region 5, or may be disposed slightly away from same positions on the two sides of the first anchor region 5, both of which fall within the protection scope of this embodiment of this application.

As a possible implementation, the second anchor region 9a and the third anchor region 9b may be located not only on the symmetry axis of the first axis accelerometer 1, but also at same distances on the two sides of the first anchor region 5, respectively. For example, as shown in FIG. 3, the second anchor region 9a, the first anchor region 5, and the third anchor region 9b may be sequentially located on the short symmetry axis of the first axis accelerometer 1; and the second anchor region 9a and the third anchor region 9b are located at same distances on the upper and lower sides of the first anchor region 5, respectively.

Therefore, in this embodiment of this application, the second anchor region 9a and the third anchor region 9b are located on the symmetry axis of the first axis accelerometer 1; and/or the second anchor region 9a and the third anchor region 9b are located at same distances on the two sides of the first anchor region 5, respectively. This can help further improve the degree of freedom around the movable structure in the accelerometer, and can not only reduce process-induced stress introduced by an anchor in a manufacturing process of the accelerometer, but also reduce impact, on the sensitive structure, of thermal stress caused by a temperature change in a use process of the accelerometer, thereby helping reduce temperature coefficients of parameters such as a bias and a scale factor of the accelerometer, and improve stability of a component.

In some embodiments, the first fixed electrode 8a may be surrounded by the first proof mass 4; and/or the second fixed electrode 8b may be surrounded by the first proof mass 4. In other words, the first proof mass 4 may be located around the first fixed electrode 8a, and/or located around the second fixed electrode 8b. For example, in FIG. 3, each of the upper, lower, left, and right sides of the first fixed electrode 8a or the second fixed electrode 8b may be provided with the first proof mass 4.

In this way, in one aspect, a directly opposite area of two electrode plates of the first capacitor and/or the second capacitor can be increased, thereby facilitating measurement of capacitance of the first capacitor and/or the second capacitor. In another aspect, this can further help improve the degree of freedom around the movable structure in the accelerometer, thereby helping reduce the temperature coefficients of the parameters such as the bias and the scale factor of the accelerometer, and improve the stability of the component.

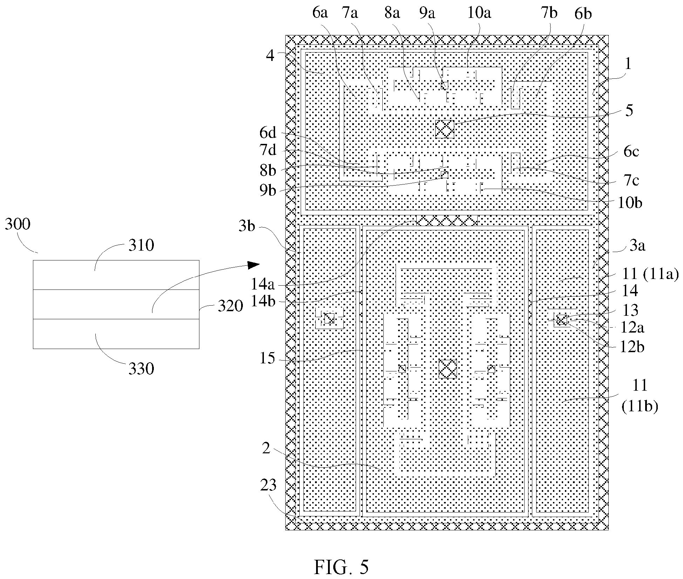

FIG. 5 shows an example of the accelerometer 300. Same reference numerals in FIG. 5 and FIG. 3 have same or similar meanings. Details are not described herein. As shown in FIG. 5, the accelerometer 300 further includes a second axis accelerometer 2. A sensitive axis of the second axis accelerometer 2 is orthogonal to the sensitive axis of the first axis accelerometer 1, and has the same structure as the first axis accelerometer 1. In this way, the accelerometer 300 may simultaneously detect acceleration in two directions that are mutually orthogonal in a plane.

Still refer to FIG. 5. The accelerometer 300 may further include third axis accelerometers, for example, third axis accelerometers 3a and 3b. It should be noted that, in FIG. 5, an example in which the accelerometer 300 includes two third axis accelerometers is used for description. However, this is not limited in this embodiment of this application. For example, a quantity of third axis accelerometers may be 1, 3, 4, or another number, all of which fall within the protection scope of this embodiment of this application.

Optionally, when there are a plurality of (that is, two or more) third axis accelerometers, structures of these third axis accelerometers are the same. As an example, in FIG. 5, structures of the third axis accelerometers 3a and 3b are the same.

In some embodiments, a quantity of third axis accelerometers may be an even number. Further, the even quantity of third axis accelerometers may be symmetrically disposed on two sides of the second axis accelerometer. As an example, in FIG. 5, the third axis accelerometers 3a and 3b may be symmetrically disposed on two sides of a long symmetry axis of the second axis accelerometer 2. However, this embodiment of this application is not limited thereto.

For example, in some other embodiments, the even quantity of third axis accelerometers may be symmetrically disposed (or distributed) on two sides of a short symmetry axis of the second axis accelerometer. Herein, because the second axis accelerometer 2 has the same structure as the first axis accelerometer 1, for details about the long symmetry axis and the short symmetry axis of the second axis accelerometer 2, reference may be made to descriptions of the first axis accelerometer 1. These details are not described again.

It should be noted that, in this embodiment of this application, that the even quantity of third axis accelerometers are symmetrically disposed on the two sides of the second axis accelerometer 2 includes not only a case in which the even quantity of third axis accelerometers are symmetrically distributed on the two sides of the second axis accelerometer 2, but also a case in which the even quantity of third axis accelerometers are approximately symmetrically distributed on the two sides of the second axis accelerometer 2.

Therefore, in this embodiment of this application, the even quantity of third axis accelerometers are symmetrically disposed on the two sides of the second axis accelerometer to help the accelerometer 300 form a symmetric structure, thereby enabling the accelerometer 300 to generate more symmetric strain for stress, and helping differential detection of a signal of the accelerometer

The following describes a structure of the third axis accelerometer by using the third axis accelerometer 3a in the accelerometer 300 as an example. Still refer to FIG. 5. The third axis accelerometer 3a may include a fourth anchor region 13, a torsion beam (for example, 12a or 12b), a second proof mass (for example, 11, 11a, or 11b), and a fixed electrode (which may also be referred to as a fixed electrode plate, not shown in FIG. 5). It should be noted that the second proof mass 11a and the second proof mass 11b are part of the second proof mass 11, and are connected to each other. In other words, the second proof mass 11a and the second proof mass 11b may also be together referred to as the second proof mass 11. This is not limited in this application.

The fourth anchor region 13 is connected to the substrate layer 330 and/or the upper cover layer 310. Similar to the anchor region in the first axis accelerometer 1, when the accelerometer 300 moves at the same rate as the motion object, a position of the fourth anchor region 13 can remain unchanged relative to the substrate layer 330 or the upper cover layer 310 in the accelerometer 300.

Herein, the fourth anchor region 13 may include at least one anchor. Specifically, the fourth anchor region 13 is similar to the first anchor region 5, the second anchor region 9a, or the third anchor region 9c. For details, refer to the description in FIG. 4. These details are not described again.

In this embodiment of this application, the torsion beam is connected to the fourth anchor region 13, and is connected to the second proof mass. In this way, the second proof mass can be by supported by the torsion beam and suspended above the substrate layer 330, that is, the torsion beam can support the second proof mass. For example, as shown in FIG. 5, the torsion beam 12a may be connected to the fourth anchor region 13 and connected to the second proof mass (for example, 11, 11a, or l lb); and the torsion beam 12b may be connected to the fourth anchor region 13 and connected to the second proof mass (for example, 11, 11a, or 11b).

Still refer to FIG. 5. In the third axis accelerometer 3a, a centroid of the entire second proof mass (that is, a structure of a sum of 11a and 11b) deviates from the fourth anchor region 13. In this way, when the accelerometer 300 moves at the same rate as the motion object, the second proof mass (for example, 11, 11a, or 11b) generates an inertia moment by sensing a component, in a direction of a sensitive axis of the third axis accelerometer 3a, of the acceleration of the motion object. In this case, a moment generated by torsion of the torsion beam is balanced with the inertia moment. Correspondingly, the second proof mass deflects with deflection of the torsion beam, so that the second proof mass generates displacement in the direction of the sensitive axis of the third axis accelerometer 3a.

As an example, in FIG. 5, under an action of acceleration in the direction of the sensitive axis of the third axis accelerometer 3a, one of the second proof masses 11a and 11b (for example, 11a) moves in a direction perpendicular to the upper cover layer 310, and the other proof mass (for example, 11b) moves in a direction perpendicular to the substrate layer 330.

It should be noted that two torsion beams, for example, 12a and 12b, are shown in the third axis accelerometer 3a. However, this embodiment of this application is not limited thereto. For example, in the third axis accelerometer 3a, there may alternatively be one torsion beam.

It should be further noted that two second proof masses, for example, 11a and 11b, are shown in the third axis accelerometer 3a. However, this embodiment of this application is not limited thereto. For example, in the third axis accelerometer 3a, there may alternatively be one second proof mass.

In this embodiment of this application, the second proof mass (for example, 11a or 11b) and the fixed electrode form a third capacitor (which may also be referred to as a third detection capacitor). It can be learned from the foregoing description that, when the accelerometer 300 moves at the same rate as the motion object, the second proof mass (for example, 11a or 11b) generates corresponding displacement, outside the detection surface (for example, in a direction perpendicular to the detection surface), relative to the substrate layer 330 or the upper cover layer, but the fixed electrode remains fixed relative to the substrate layer 330 or the upper cover layer 310. In this way, spacing between the second proof mass and the fixed electrode changes, leading to a capacitance change of the third capacitor. Therefore, acceleration input from the outside to the accelerometer 300 can be detected by detecting capacitance of the third capacitor. For example, a value of the component, in the direction of the sensitive axis of the third axis accelerometer 3a, of the acceleration of the motion object can be determined.

It should be noted that, when there are two second proof masses, for example, 11a and 11b, each proof mass may form a third capacitor with the fixed electrode. In this case, the value of the component, in the direction of the sensitive axis of the third axis accelerometer 3a, of the acceleration of the motion object can be determined by detecting capacitance of the two third capacitors or detecting capacitance of only one of the third capacitors. This is not limited in this application.

It should be further noted that, when there are two third axis accelerometers, for example, 3a and 3b, the value of the component, in the direction of the sensitive axis of the third axis accelerometer, of the acceleration of the motion object can be determined by detecting capacitance of some or all third capacitors in the two third axis accelerometers or detecting capacitance of some or all third capacitors in only one of the third axis accelerometers. This is not limited in this application.

As an example, the fixed electrode may be disposed outside the detection surface, for example, may be disposed on the upper cover layer, or disposed on a side, close to the structure layer, of the substrate layer. This is not limited in this application.

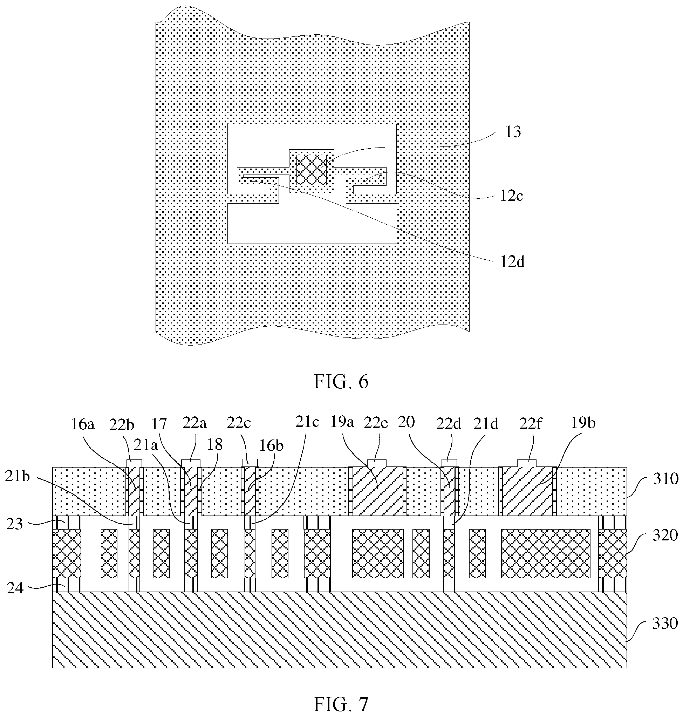

In some possible implementations, in the third axis accelerometer, the torsion beam may be of a foldable structure. FIG. 6 shows an example of torsion beams 12c and 12d of foldable structures. Stress on the torsion beam can be effectively released by setting the torsion beam to the foldable structure, thereby helping further reduce impact of the stress on a sensitive structure on the third axis accelerometer, and improve stability of the accelerometer

In some embodiments, the upper cover layer 310 may be manufactured by using a through silicon via (through silicon via, TSV) process. For example, a conductive column may be manufactured by using the TSV process. The conductive column may be connected to the structure layer 320 by using a bonding electrode, for example, may be connected to an anchor region in the structure layer. In this way, in one aspect, a fixed connection between the upper cover layer 310 and the structure layer 320 may be implemented by using the bonding electrode; and in another aspect, an electrical signal in the structure layer may be led out to a surface of the upper cover layer 310 by using the bonding electrode and the conductive column.

FIG. 7 shows an example of a side view of the accelerometer 300. The side view may be, for example, a side view of the accelerometer 300 in FIG. 5. As shown in FIG. 7, the upper cover layer 310 may include a first conductive column 17, a second conductive column 16a, and a third conductive column 16b. The accelerometer 300 may further include a first bonding electrode 21a located between the first conductive column 17 and the first anchor region 5, a second bonding electrode 21b located between the second conductive column 16a and the second anchor region 9a, and a third bonding electrode 21c located between the third conductive column 16b and the third anchor region 9b. The first bonding electrode 21a is configured to connect the first conductive column 17 to the first anchor region 5. The second bonding electrode 21b is configured to connect the second conductive column 16a to the second anchor region 9a. The third bonding electrode 21c is configured to connect the third conductive column 16b to the third anchor region 9c. In other words, in this case, the first anchor region 5 is connected to the upper cover layer 310; the second anchor region 9a is connected to the upper cover layer 310; and the third anchor region 9b is connected to the upper cover layer 310.

The first conductive column 17, the second conductive column 16a, and the third conductive column 16b are connected to electrodes, respectively. For example, as shown in FIG. 7, the first conductive column 17 is connected to an electrode 22a; the second conductive column 16a is connected to an electrode 22b; and the third conductive column 16b is connected to an electrode 22c.

In addition, combinations of the first bonding electrode 21a and the first conductive column 17, the second bonding electrode 21b and the second conductive column 16a, as well as the third bonding electrode 21c and the third conductive column 16c are respectively configured to conduct an electrical signal on the first axis accelerometer 1 in the structure layer 320 to the surface of the upper cover layer 310; and the electrodes 22a, 22b, and 22c are respectively configured to lead out the electrical signal that is conducted to the surface of the upper cover layer 310. In this way, the capacitance of the first capacitor may be detected by using the electrodes 22a and 22b; and the capacitance of the second capacitor may be detected by using the electrodes 22a and 22c. Then, acceleration measured by the first axis accelerometer 1 may be determined based on the detected capacitance.

Still refer to FIG. 7. The upper cover layer 310 may further include a fourth conductive column 20. The accelerometer 300 further includes a fourth bonding electrode 2ld, located between the fourth conductive column 20 and the fourth anchor region 13 and configured to connect the fourth conductive column 20 to the fourth anchor region 13. The fourth conductive column 20 is further connected to the electrode 22d. In other words, in this case, the fourth anchor region 13 is connected to the upper cover layer 310. In addition, in FIG. 7, the upper cover layer 310 further includes fixed electrodes (for example, 19a and 19b). The fixed electrodes are connected to electrodes. For example, the fixed electrode 19a is connected to an electrode 22e; and the fixed electrode 19b is connected to an electrode 22f. As an example, the fixed electrode 19a and the second proof mass 11a may form a third capacitor; and the fixed electrode 19b and the second proof mass 11b may form a third capacitor.

It should be noted that, the fixed electrode 19a may be directly opposite to or slightly away from the second proof mass 11a; and the fixed electrode 19b may be directly opposite to or slightly away from the second proof mass 11b. This is not limited in this application. In addition, an area that is of the fixed electrode and that is relative to the second proof mass may be the same as, greater than, or less than an area of the second proof mass. This is not limited in this application. For example, as shown in FIG. 7, an area that is of the fixed electrode 19a and that is relative to the second proof mass 11a is the same as an area of the second proof mass 11a; and an area that is of the fixed electrode 19b and that is relative to the second proof mass 11b is less than an area of the second proof mass 11b

In addition, the fourth bonding electrode 21d and the fourth conductive column 20 are configured to conduct an electrical signal on the third axis accelerometer 3a in the structure layer 320 to a surface of the upper cover layer 310; the electrode 22d is configured to lead out the electrical signal that is conducted to the surface of the upper cover layer 310; and the electrodes 22e and 22f are configured to lead out electrical signals on the fixed electrodes 19a and 19b, respectively. In this way, capacitance of the third capacitor formed by the fixed electrode 19a and the second proof mass 11a may be detected by using the electrodes 22d and 22e; and capacitance of the third capacitor formed by the fixed electrode 19b and the second proof mass 11b may be detected by using the electrodes 22d and 22f. Then, acceleration measured by the third axis accelerometer 3a may be determined based on the detected capacitance.

In addition, in some embodiments, the fixed electrode plate may be manufactured by using the TSV process. This helps reduce parasitic capacitance of the third capacitor, thereby reducing a noise level of the accelerometer 300, and simplifying a manufacturing process.

In some embodiments, insulation rings may be further manufactured around the fixed electrodes (for example, 19a and 19b). The insulation rings are configured to electrically isolate the fixed electrode from another surrounding region.

Optionally, for the accelerometer 300 in FIG. 7, the first anchor region 5 may be further connected to the substrate layer 330 or not connected to the substrate layer 330; the second anchor region 9a may be further connected to the substrate layer 330 or not connected to the substrate layer 330; the third anchor region 9b may be further connected to the substrate layer 330 or not connected to the substrate layer 330; and the fourth anchor region 13 may be further connected to the substrate layer 330 or not connected to the substrate layer 330. This is not limited in this application.

In some embodiments, insulation rings may be further manufactured around conductive columns (for example, the first conductive column, the second conductive column, the third conductive column, and the fourth conductive column). The insulation ring is configured to electrically isolate the conductive column from another surrounding region. The first conductive column 17 is used as an example. As shown in FIG. 7, an insulation ring 18 may be wrapped around the first conductive column 17a. The insulation ring 18 is configured to electrically isolate the first conductive column 17 from another surrounding area.

In some embodiments, as shown in FIG. 7, the accelerometer 300 may further include a package ring 23, located between the upper cover layer 310 and the structure layer 320 and configured to bond with the upper cover layer 310 and the structure layer 320, to implement a fixed connection between the upper cover layer 310 and the structure layer 320. As an example, the package ring 23 may be gold, copper, or the like. This is not limited.

In some embodiments, as shown in FIG. 7, the accelerometer 300 may further include an insulation layer 24, located between the structure layer 320 and the substrate layer 330 and configured to bond with the structure layer 320 and the substrate layer 330, to implement a fixed connection between the structure layer 320 and the substrate layer 330. As an example, the insulation layer 24 may be SiO₂. This is not limited.

Therefore, in this embodiment of this application, the package ring 23 and/or the insulation layer 24 are/is disposed to help the accelerometer 300 form a closed cavity, thereby providing a stable operating environment for the structure layer 320, and facilitating reliability improvement of the accelerometer 300.

In some other embodiments, the upper cover layer 310 may exclude the conductive columns. Instead, an insulation layer is manufactured on a surface of the substrate layer 330. A bonding electrode may be manufactured between the insulation layer and the structure layer 320. For example, the bonding electrode may be connected to an anchor region in the structure layer 320. In this way, the substrate layer 330 and the structure layer may be connected by using the bonding electrode. In addition, the bonding electrode may be connected to an electrode, to lead out an electrical signal in the structure layer to the electrode that is connected to the bonding electrode.

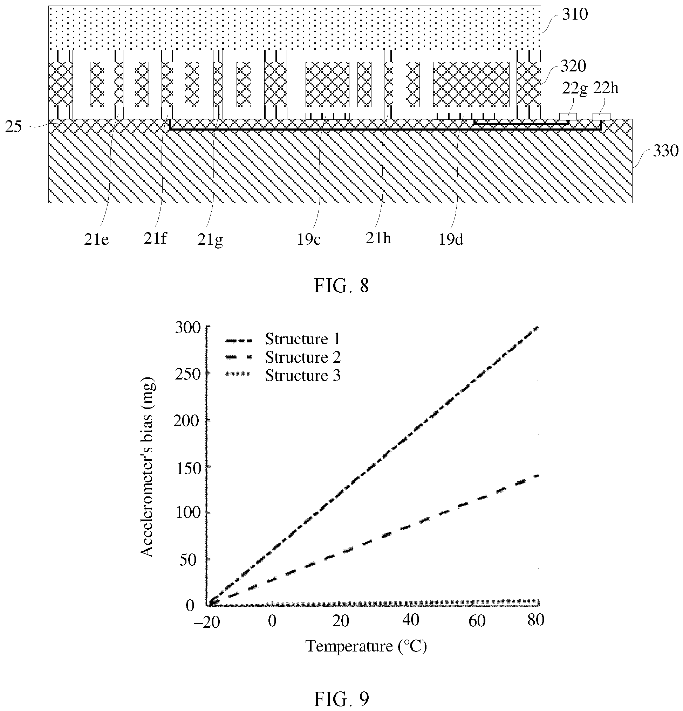

FIG. 8 shows another example of a side view of the accelerometer 300. The side view may be, for example, a side view of the accelerometer 300 in FIG. 5. As shown in FIG. 8, the accelerometer 300 may further include an insulation layer 25 located between the structure layer 320 and the substrate layer 330, a fifth bonding electrode 21f, a sixth bonding electrode 21e, and a seventh bonding electrode 21g. The fifth bonding electrode 21f is configured to connect to the first anchor region 5. The sixth bonding electrode 21e is configured to connect to the second anchor region 9a. The seventh bonding electrode 21g is configured to connect to the third anchor region 9b.

As an example, the insulation layer 25 may be connected to the substrate layer 330, for example, may be connected to a surface that is of the substrate layer 330 and that is close to the structure layer 320, that is, the insulation layer 25 may be in surface contact with the substrate layer 330.

The fifth bonding electrode 21f, the sixth bonding electrode 21e, and the seventh bonding electrode 21g are connected to different electrodes, respectively. The fifth bonding electrode 21f is located on the insulation layer 25 (for example, located on a surface of the insulation layer 25) or wrapped in the insulation layer 25. The sixth bonding electrode 21e is located on the insulation layer 25 (for example, located on the surface of the insulation layer 25) or wrapped in the insulation layer 25. The seventh bonding electrode 21g is located on the insulation layer 25 (for example, located on the surface of the insulation layer 25) or wrapped in the insulation layer 25.

As a possible implementation, a bonding electrode (for example, the fifth bonding electrode 21f, the sixth bonding electrode 21e, or the seventh bonding electrode 21g) may be connected, by using a conducting wire, to an electrode corresponding to the bonding electrode. For example, the conducting wire may be laid on a surface of the insulation layer or wrapped in the insulation layer. This is not limited in this application.

For example, as shown in FIG. 8, the accelerometer 300 may be set to a stepped shape. The substrate layer 330 and the insulation layer 25 may form a step. In this way, the electrode may be disposed on the step. FIG. 8 shows an example in which the fifth bonding electrode 21f is connected to the electrode 22h by using a conducting wire. For example, the conducting wire herein may be laid on the surface of the insulation layer 25, or may be wrapped in the insulation layer 25. It may be understood that the fifth bonding electrode 21f, the sixth bonding electrode 21e, and the seventh bonding electrode 21g are connected to different electrodes by using conducting wires, respectively. An electrical signal on the first axis accelerometer 1 in the structure layer 320 may be led out by using these different electrodes. Then, capacitance of the first capacitor may be detected by using these electrodes; and acceleration measured by the first axis accelerometer 1 may be determined based on the detected capacitance.

Still refer to FIG. 8. The accelerometer 300 may further include an eighth bonding electrode 21h. The eighth bonding electrode 21h is configured to connect to the fourth anchor structure 13 and is located on the insulation layer 25 or wrapped in the insulation layer 25. In other words, the fourth anchor region 13 may be connected to the substrate layer 330. As an example, the fixed electrode 19c and the second proof mass 11a may form a third capacitor; and the fixed electrode 19d and the second proof mass 11b may form a third capacitor

It should be noted that, the fixed electrode 19c may be directly opposite to or slightly away from the second proof mass 11a; and the fixed electrode 19d may be directly opposite to or slightly away from the second proof mass 11b. This is not limited in this application. In addition, an area that is of the fixed electrode and that is relative to the second proof mass may be the same as, greater than, or less than an area of the second proof mass. This is not limited in this application. For example, as shown in FIG. 8, an area that is of the fixed electrode 19c and that is relative to the second proof mass 11a is the same as or close to the area of the second proof mass 11a; and an area that is of the fixed electrode 19d and that is relative to the second proof mass 11b is less than the area of the second proof mass 11b.

The fixed electrodes (for example, 19c and 19d) and the eighth bonding electrode 21h are connected to different electrodes, respectively, for example, connected to the electrodes by using conducting wires, respectively. For example, the conducting wire may be laid on a surface of the insulation layer or wrapped in the insulation layer. This is not limited in this application.

It should be noted that in this embodiment of this application, that a bonding electrode (for example, the fifth bonding electrode 21f, the sixth bonding electrode 21e, the seventh bonding electrode 21g, or the eighth bonding electrode 21h) is wrapped in the insulation layer may include a case in which the bonding electrode is at least partially wrapped in the insulation layer. In other words, part of the bonding electrode may be located outside the insulation layer in this case. This is not limited in this application.

FIG. 8 shows an example in which the fixed electrode 19d is connected to the electrode 22g by using a conducting wire. For example, the conducting wire herein may be laid on the surface of the insulation layer 25, or may be wrapped in the insulation layer 25. It may be understood that, the fixed electrodes 19c and 19d and the eighth bonding electrode 21h are connected to different electrodes by using conducting wires, respectively. An electrical signal on the third axis accelerometer 3a may be led out by using these different electrodes. Then, capacitance of the third capacitor may be detected by using these electrodes; and acceleration measured by the third axis accelerometer 3a may be determined based on the detected capacitance.

In addition, in this embodiment of this application, process difficulty of the accelerometer can be reduced by manufacturing, above the insulation layer 25 or in the insulation layer 25, a fixed electrode and a bonding electrode that is connected to an electrode; and manufacturing costs are low.

Optionally, for the accelerometer 300 in FIG. 8, the first anchor region 5 may be further connected to the upper cover layer 310 or not connected to the upper cover layer 310; the second anchor region 9a may be further connected to the upper cover layer 310 or not connected to the upper cover layer 310; the third anchor region 9b may be further connected to the upper cover layer 310 or not connected to the upper cover layer 310; and the fourth anchor region 13 may be further connected to the upper cover layer 310 or not connected to the upper cover layer 310. This is not limited in this application.

It should be noted that, FIG. 7 and FIG. 8 are used above as examples to describe side views of the accelerometer 300. However, this embodiment of this application is not limited thereto. For example, the accelerometer 300 may be manufactured in a manner that integrates implementations in FIG. 7 and FIG. 8. As an example, the upper cover layer 310 may include a conductive column connected to an electrode. In addition, an insulation layer and a bonding electrode that is connected to an electrode may be included between the structure layer 320 and the substrate layer 330.

As a specific example, an anchor region of the first axis accelerometer 1 may be connected, by using the bonding electrode, to the conductive column that is connected to the electrode; and an anchor region of the third axis accelerometer 3a may be connected, by using the bonding electrode that is connected to the electrode, to the insulation layer and a fixed electrode that is separately connected to the insulation layer and the electrode.

As another specific example, the anchor region of the first axis accelerometer 1 may be connected to the insulation layer by using the bonding electrode that is connected to the electrode; the anchor region of the third axis accelerometer 3a may be connected, by using the bonding electrode, to the conductive column that is connected to the electrode; and the fixed electrode may be disposed in the upper cover layer 310.

In some embodiments, the accelerometer 300 may further include an internal frame; and at least one of the first axis accelerometer, the second axis accelerometer, and the third axis accelerometer may be disposed in the internal frame. In addition, the internal frame may be provided with at least one anchor region (which may be, for example, referred to as a fifth anchor region); and the fifth anchor region is connected to the substrate layer and/or the upper cover layer.

Still refer to FIG. 5. The structure layer 320 may include an internal frame 15. The first axis accelerometer 1, the second axis accelerometer 2, and the third axis accelerometers 3a and 3b are disposed in the internal frame 15. As shown in FIG. 5, the internal frame 15 is provided with at least one fifth anchor region (for example, 14a, 14b, and 14c). The fifth anchor region is connected to the substrate layer 330 and/or the upper cover layer 310. The fifth anchor region may also be referred to as a distributed anchor region. This is not limited in this application.

As an example, as shown in FIG. 5, the fifth anchor region 14a may be located on an internal frame between the first axis accelerometer 1 and the second axis accelerometer 2; the fifth anchor region 14b may be located on an internal frame between the second axis accelerometer 2 and the third axis accelerometer 3b; and the fifth anchor region 14c may be located on an internal frame between the second axis accelerometer 2 and the third axis accelerometer 3a. This is not limited in this application.

Herein, the fifth anchor region may include at least one anchor. Specifically, the fifth anchor region is similar to the first anchor region 5, the second anchor region 9a, or the third anchor region 9b. For details, refer to the description in FIG. 4. These details are not described again.

In a third axis accelerometer (for example, 3a or 3b), acceleration detection is implemented by detecting capacitance between a second proof mass and a fixed electrode (for example, between 11a and 19a, or between 11b and 19b, or between 11a and 19c, or between 11b and 19c). Therefore, a change of spacing between the second proof mass and the fixed electrode directly affects performance of the accelerometer. In a use process of the accelerometer, an ambient temperature may change, and thermal expansion and stress of different structures are different. As a result, spacing between the second proof mass and the fixed electrode changes. In this embodiment of this application, impact that is of thermal expansion and stress of different structures and that is on a change of the spacing between the second proof mass and the fixed electrode can be reduced by designing, on the internal frame, the fifth anchor region that is securely connected to the upper cover layer and/or the substrate layer

Further, a position of the fifth anchor region may be optimized based on stress distribution, so that impact of a temperature change on the spacing between the second proof mass and the fixed electrode is consistent, thereby reducing impact of a temperature on the performance of the accelerometer. FIG. 9 shows an example of results of simulation of temperatures and biases of accelerometers of different structures. A structure 1 is a structure in which no anchor is designed on the internal frame 15. A structure 2 is a structure in which the internal frame 15 is completely covered by anchors. A structure 3 is a structure of a distributed anchor design that has been optimized (for example, a fifth anchor region corresponding to FIG. 5).

As shown in FIG. 9, a dash dot line shows how a bias of an accelerometer using the structure 1 varies with temperatures, and a corresponding variation coefficient is 3 mg/°C; a dashed line shows how a bias of an accelerometer using the structure 2 varies with temperatures, and a corresponding variation coefficient is 1.43 mg/°C; and a dotted line shows how a bias of an accelerometer using the structure 3 varies with temperatures, and a corresponding variation coefficient is 0.05 mg/°C. Therefore, simulation results show that a distributed anchor design can effectively reduce impact of temperatures on a bias of an accelerometer.

In some embodiments, as shown in FIG. 5, the accelerometer 300 may further include a package ring 23; and the package ring 23 may be disposed around the internal frame 15.

Embodiments of this application may be used separately or jointly. This is not limited in this application.

It should be understood that in the foregoing embodiments, "first", "second", "third", and the like are merely used to differentiate between different objects, but should not constitute any limitation on this application.

It should be further understood that the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. The term "at least one" means one or more. The term "at least one of A and B", similar to the term "A and/or B", describes an association relationship between the associated objects and indicates that three relationships may exist. For example, at least one of A and B may indicate the following three cases: Only A exists, both A and B exist, and only B exists.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An accelerometer, comprising an upper cover layer, a first axis accelerometer, and a substrate layer, wherein the first axis accelerometer is located between the upper cover layer and the substrate layer, wherein
the first axis accelerometer comprises a first anchor region, a cantilever beam, a first proof mass, a first movable electrode, a second movable electrode, a first fixed electrode, a second fixed electrode, a second anchor region, and a third anchor region;
one end of the cantilever beam is connected to the first anchor region, the other end thereof is connected to the first proof mass, and the first proof mass is supported by the cantilever beam and suspended above the substrate layer;
the first movable electrode is connected to the first proof mass, the first fixed electrode is connected to the second anchor region, and the first movable electrode and the first fixed electrode form a first capacitor;
the second movable electrode is connected to the first proof mass, the second fixed electrode is connected to the third anchor region, and the second movable electrode and the second fixed electrode form a second capacitor; and
the first anchor region is connected to the substrate layer and/or the upper cover layer, the second anchor region is connected to the substrate layer and/or the upper cover layer, the third anchor region is connected to the substrate layer and/or the upper cover layer, and the first anchor region is located at a central position of the first axis accelerometer

2. The accelerometer according to claim 1, wherein the second anchor region and the third anchor region are located on a symmetry axis of the first axis accelerometer.

3. The accelerometer according to claim 2, wherein the second anchor region and the third anchor region are located on two sides of the first anchor region, respectively.

4. The accelerometer according to claim 3, wherein a distance between the second anchor region and the first anchor region is the same as a distance between the third anchor region and the first anchor region.

5. The accelerometer according to any one of claims 1 to 4, wherein the first fixed electrode is surrounded by the first proof mass, and/or the second fixed electrode is surrounded by the first proof mass.

6. The accelerometer according to any one of claims 1 to 5, wherein all of the first anchor region, the second anchor region, and the third anchor region are connected to the upper cover layer; and
the upper cover layer comprises a first conductive column, a second conductive column, and a third conductive column; and the accelerometer further comprises:
a first bonding electrode, configured to connect the first conductive column to the first anchor region;
a second bonding electrode, configured to connect the second conductive column to the second anchor region; and
a third bonding electrode, configured to connect the third conductive column to the third anchor region, wherein
the first conductive column, the second conductive column, and the third conductive column are connected to different electrodes, respectively.

7. The accelerometer according to claim 6, wherein the first conductive column, the second conductive column, and the third conductive column are separately manufactured by using a through silicon via process.

8. The accelerometer according to any one of claims 1 to 5, wherein the first anchor region is connected to the substrate layer, the second anchor region is connected to the substrate layer, and the third anchor region is connected to the substrate layer;
the accelerometer further comprises an insulation layer located between the first axis accelerometer and the substrate layer, a fifth bonding electrode, a sixth bonding electrode, and a seventh bonding electrode, wherein the fifth bonding electrode is configured to connect to the first anchor region, the sixth bonding electrode is configured to connect to the second anchor region, the seventh bonding electrode is configured to connect to the third anchor region, and the fifth bonding electrode, the sixth bonding electrode, and the seventh bonding electrode are connected to different electrodes, respectively; and
the fifth bonding electrode is located on the insulation layer or wrapped in the insulation layer, the sixth bonding electrode is located on the insulation layer or wrapped in the insulation layer, and the seventh bonding electrode is located on the insulation layer or wrapped in the insulation layer

9. The accelerometer according to any one of claims 1 to 8, further comprising a second axis accelerometer, wherein a sensitive axis of the second axis accelerometer is orthogonal to a sensitive axis of the first axis accelerometer, and structures of the second axis accelerometer and the first axis accelerometer are the same.

10. The accelerometer according to any one of claims 1 to 9, further comprising a third axis accelerometer, wherein the third axis accelerometer comprises a fourth anchor region, a torsion beam, a second proof mass, and a fixed electrode; and
the fourth anchor region is connected to the substrate layer and/or the upper cover layer, the torsion beam is connected to the fourth anchor region and is connected to the second proof mass, a centroid of the second proof mass deviates from the fourth anchor region, and the second proof mass and the fixed electrode form a third capacitor.

11. The accelerometer according to claim 10, wherein the fourth anchor region is connected to the upper cover layer, and the fixed electrode is located on the upper cover layer; and
the upper cover layer further comprises a fourth conductive column, the accelerometer further comprises a fourth bonding electrode, the fourth bonding electrode is configured to connect the fourth conductive column to the fourth anchor region, and the fixed electrode and the fourth conductive column are connected to different electrodes, respectively.

12. The accelerometer according to claim 11, wherein the fourth conductive column is manufactured by using the through silicon via process.

13. The accelerometer according to claim 10, wherein the fourth anchor region is connected to the substrate layer, the accelerometer further comprises an eighth bonding electrode and the insulation layer that is located between the first axis accelerometer and the substrate layer, the eighth bonding electrode is configured to connect to the fourth anchor structure, the eighth bonding electrode is located on the insulation layer or wrapped in the insulation layer, and the fixed electrode and the eighth bonding electrode are connected to different electrodes, respectively.

14. The accelerometer according to any one of claims 10 to 13, wherein the torsion beam is of a foldable structure.

15. The accelerometer according to any one of claims 10 to 14, wherein a quantity of third axis accelerometers is an even number, and at least two of the third axis accelerometers are symmetrically disposed on two sides of the second axis accelerometer.

16. The accelerometer according to any one of claims 1 to 15, further comprising an internal frame, wherein the internal frame is provided with at least one fifth anchor region, the fifth anchor region is connected to the substrate layer and/or the upper cover layer, and at least one of the first axis accelerometer, the second axis accelerometer, and the third axis accelerometer is disposed in the internal frame.

17. The accelerometer according to any one of claims 1 to 16, wherein the first axis accelerometer further comprises a stress isolation structure, and the stress isolation structure is configured to connect the cantilever beam to the first anchor region.

18. The accelerometer according to any one of claims 1 to 17, wherein a quantity of cantilever beams is an even number, and at least two of the cantilever beams are symmetrically disposed on two sides of the symmetry axis of the first axis accelerometer

19. An inertial measurement unit IMU, comprising the accelerometer according to any one of claims 1 to 18, a gyroscope, and a signal processing chip, wherein
the accelerometer is configured to obtain linear acceleration of a motion object;
the gyroscope is configured to obtain a rotation signal of the motion object; and
the signal processing chip is configured to: determine linear motion information of the motion object based on the linear acceleration, and determine rotation information of the motion object based on the rotation signal.

20. An electronic device, comprising the IMU according to claim 19 and a processor, wherein the IMU is configured to obtain linear motion information and rotation information of a motion object, and the processor is configured to determine information about a position and a posture of the motion object based on the linear motion information and the rotation information.

21. The electronic device according to claim 20, further comprising a global positioning system GPS/BeiDou module, configured to obtain position information of the motion object in a terrestrial coordinate system; and
the processor is specifically configured to: determine the information about the position and the posture of the motion object based on the linear motion information, the rotation information, and the position information in the terrestrial coordinate system.
